# EUROPEAN PATENT APPLICATION

(11) **EP 4 752 863 A1**
(43) Date of publication of application: **03.06.2026**
(21) Application number: 24216253.5
(22) Date of filing: 28.11.2024
(51) Int. Cl.: G08G 5/26, G08G 5/52, G08G 5/54, G08G 5/76, G08G 5/55

(54) **AIRCRAFT ASSISTANCE SYSTEM AND AIRCRAFT ASSISTING FLYING ALONG A PATH**

(71) Applicant: AIRBUS Operations GmbH, 21129 Hamburg (DE)
(72) Inventor: Werthmann, Christopher Victor, 21129 Hamburg (DE); Bachmann, Thomas, 21129 Hamburg (DE); Friedel, Andreas, 21129 Hamburg (DE); Bruhn, Marvin, 21129 Hamburg (DE)
(74) Representative: Schornack, Oliver

(57) **Abstract**

The present disclosure relates to a an aircraft assistance system measuring a wind speed and direction in a vicinity of an aerodrome (10) and calculating a wind speed and direction in a path (112), along which the aircraft (100) approaches or departs, and predict wind data representing a wind speed and direction in the path (112) for a predetermined future time period. The present disclosure further relates to an aircraft that receives the predicted wind data transmitted by the aircraft assistance system and determines the predicted wind speed and direction along the path (112), and displays a visualisation about the predicted wind speed and direction or provides an autopilot system adapting a flight path accordingly.

## Description

The present disclosure generally relates to an aircraft assistance system and corresponding aircraft for assisting approaching and departing an aerodrome. Particularly, the present disclosure relates to an aircraft assistance system having a local wind detection system and calculating a wind speed and direction in a path, along which the aircraft approaches or departs an aerodrome. Furthermore, the present disclosure relates to an aircraft having a flight guidance system receiving data from the aircraft assistance system and visualising a predicted wind speed and direction on a display of the aircraft.

A conventional landing approach of an aircraft to an aerodrome is usually performed manually by the pilot and/or under support of a guidance system. For instance, the aircraft can approach an aerodrome at a 3° glide slope, and/or under employment of an instrument landing system (ILS). Depending on the circumstances of the aerodrome, a pilot may receive in advance metrological data of the region where the aerodrome is located. Such data may include a general metrological situation in the near future (e.g., within the next 30 minutes or within the next 9, 24 or 30 hours).

Eventually, a pilot may be made aware of a certain wind situation, such as wind shear, based on information provided by pilots of previous aircrafts.

However, the landing approach at as well as the departing of an aircraft from an aerodrome can still be improved.

It is therefore an object of the present disclosure to provide an aircraft assistance system and an aircraft allowing an improved approaching at and/or departing of the aircraft from an aerodrome.

This object is solved by the present invention as defined in the independent claims. Preferred embodiments are defined by the dependent claims.

According to a first aspect to better understand the present disclosure, an aircraft assistance system for assisting an aircraft approaching and departing an aerodrome comprises a local wind detection system configured to measure a wind speed and direction in a vicinity of the aerodrome, and a controller. The controller is configured to receive data representing the measured wind speed and direction, calculate a wind speed and direction in a path, along which the aircraft approaches or departs the aerodrome, predict wind data representing a wind speed and direction in the path for a predetermined future time period, and transmit the predicted wind data to the aircraft.

Thus, the disclosed system allows capturing and analysing a local weather at the aerodrome or airport, and provides specific wind data to an aircraft approaching at or departing from the aerodrome. This increases the resolution of the information accessible at the aircraft, and significantly improves approaching or departing from the aerodrome. As a mere example, the predicted wind data can be made available to a pilot and/or an assisted landing system in the aircraft (e.g., an autopilot or the like), so that both are aware of the current and future wind situation.

For instance, in case of local shear winds, updrafts and/or downdrafts in the approaching/departing path the pilot and/or automatic system can react to such wind, even before encountering them. Such aircraft assistance system is particularly useful for airports having difficult approaching/departing paths, for example, in a mountainous area, at a coast or the like.

In an implementation variant, the local wind detection system can comprise a ground weather measuring system, wherein the controller can be further configured to predict the wind data by using a machine learning algorithm. Thus, the weather in the vicinity of the aerodrome can be measured in real time and particular weather parameters can be input to the machine learning algorithm in real time. Such parameters can include wind speed, wind direction, temperature, humidity, height above ground of the measuring system or the measured area, and the like. The machine learning algorithm can then output a prediction of a wind speed and direction (i.e., the predicted wind data) in the path, along which the aircraft approaches or departs the aerodrome, for the predetermined future time point.

In an implementation variant, the machine learning algorithm can be trained on the basis of data generated by simulations of wind speed and direction in the vicinity of the aerodrome, and/or data measured by employing one or more drones, and/or data measured by employing one or more traced balloons, and/or data derived from general metrological weather information for the region of the aerodrome, and/or data measured by the ground weather measuring system. It is to be understood that such training data can be generated and/or collected over a long time period, such as several weeks, several months or even a year or more, in order to reliably train the machine learning algorithm.

It is further to be understood that the machine learning algorithm can be continuously or periodically be trained on the data received from the local wind detection system.

In an implementation variant, the ground weather measuring system can comprise a plurality of wind measuring units. Such wind measuring units can be provided adjacent to (near) the aerodrome, such as a runway or the like. For instance, the plurality of wind measuring units can be positioned in a region underneath the path, along which the aircraft approaches or departs the aerodrome.

As a mere example, each wind measuring unit can be configured to measure a wind in one direction, in two directions, particularly planar on the ground, or in all three-dimensional directions. Thus, the aircraft assistance system can receive a plurality of data items representing the measured wind speed and direction from a plurality of wind measuring units. This large amount of data can cover a larger region adjacent/near the aerodrome, so that the machine learning algorithm can predict wind data for the approaching/departing path more reliably.

In an implementation variant, the plurality of wind measuring units can be positioned in a mesh or grid in the vicinity of the aerodrome.

In an implementation variant, at least some of the plurality of wind measuring units can be provided at a different level above ground than others of the plurality of wind measuring units. Thus, the wind speed and direction can be measured in a three-dimensional space and corresponding three-dimensional data can be derived therefrom.

In an implementation variant, the ground weather measuring system can comprise a plurality of wind measuring units configured to measure a wind in one direction or in two directions. The data representing the measured wind speed and direction may cover a two-dimensional area, such as an area planar on the ground. A two-dimensional wind measuring system (or system measuring a wind speed and direction in a planar area) is easy to implement and cost-effective.

Furthermore, the controller can then be configured to calculate a wind speed and direction in the path from the two-dimensional data. In others, the controller can be configured to determine an updraft and/or downdraft in one of the regions based on the two-dimensional data with a mathematical model.

In an implementation variant, the local wind detection system can (further) comprise a ground based weather radar system. Such ground-based weather radar system may scan the air in the vicinity of the aerodrome. The radar system may detect wind data via the Doppler effect, and may particularly deliver reliable wind data during times of precipitation (rain etc.). As a mere example, the ground-based weather radar system may be a conventional radar system operating with UHF microwaves.

In an implementation variant, the local wind detection system can comprise one or more radar units arranged to scan the path, along which the aircraft approaches or departs. Thus, wind data can be received or generated from the radar system that covers the actual path.

In an implementation variant, the local wind detection system comprises a ground based light detection and ranging, LiDAR, system. Such LiDAR system allows measuring/generating data representing the wind speed and direction at different levels above ground (i.e. at different heights).

In an implementation variant, the local wind detection system can comprise one or more LiDAR units arranged to scan the path, along which the aircraft approaches or departs. In other words, the LiDAR units can be arranged in the vicinity and preferably below the approaching/departing path, while a scan direction is substantially vertically. It is to be understood that the LiDAR can be arranged and oriented in a different manner depending on the type and capabilities of the LiDAR unit.

In an implementation variant, the local wind detection system can comprise a sonic detection and ranging, SODAR, system, for example, a ground based SODAR system. Such SODAR system allows measuring and/or generating data representing the wind speed and direction at various heights above the ground. Such system operates like a sonar system monitoring the air instead of water.

In an implementation variant, the local wind detection system can comprise one or more SODAR units arranged to scan the path, along which the aircraft approaches or departs. In other words, the SODAR units can be arranged in the vicinity and preferably below the approaching/departing path, while a scan direction is substantially vertically. It is to be understood that the SODAR can be arranged and oriented in a different manner depending on the type and capabilities of the SODAR unit.

According to a second aspect to better understand the present disclosure, an aircraft comprises a flight guidance system, a display, and an antenna configured to receive wind data from an aircraft assistance system, according to the first aspect or one or more of its variants. In other words, the aircraft contains equipment to receive and use the data generated by and transmitted from the aircraft assistance system described above.

Furthermore, the flight guidance system is configured to determine a basic path, along which the aircraft approaches at or departs from an aerodrome, based on signals providing horizontal and vertical aerodrome guidance. Such basic path, can be a regular 3° glide slope path. The signals providing horizontal and vertical aerodrome guidance can be a signal sent from a corresponding ground unit at the aerodrome, for example, a conventional instrument landing system (ILS) signal.

It is to be understood that such basic path can alternatively or additionally be entered by a pilot, for example, for an aerodrome not being equipped with an ILS.

In any case, the basic path is an approaching/departing path chosen by a system or the pilot to reach or leave the aerodrome.

The flight guidance system is further configured to analyse the wind data received from the aircraft assistance system to determine a predicted wind speed and direction in the determined basic path, and display, on the display, a visualisation including information about the predicted wind speed and direction.

Such visualisation allows the pilot or a system in the aircraft to be aware of the wind situation in the basic path. Thus, it is possible to react on the wind situation, before the aircraft actually reaches the area having particular winds along the path. As a mere example, the pilot or the system of the aircraft can steer the aircraft differently than following the basic path, if a sheer wind, updraft or downdraft will be encountered (in near future) along the path.

This improves approaching or departing the aerodrome and makes the flight safer.

In an implementation variant, the visualisation can include one or more indicators representing the wind speed and direction. Thus, it is immediately apparent on the display from/in which direction a wind blows through the basic path and at which speed.

In an implementation variant, the one or more indicators can represent or indicate only a cross wind component and/or a vertical wind component (representing updraft and/or downdraft) and/or a head/tail wind component of the wind speed and direction. This renders the visualisation simpler for a pilot to interpret, as pilots are trained to handle crosswinds, updraft and/or downdraft as well as head/tail winds.

In an implementation variant, the indicators can be displayed along a visualisation of the basic path. Thus, a three-dimensional appearance can be achieved, where the influence by the wind on the aircraft following the basic path is immediately apparent.

As a mere example, the indicators can be displayed as arrows showing the wind direction and having a length corresponding to a magnitude of the wind speed. Thus, long arrows in the display make the pilot aware of strong winds from the illustrated direction. Thus, the arrow forms a vector indicating the wind speed and wind direction.

Alternatively or additionally, the indicators can include a wind profile displayed along a visualisation of the basic path. Such wind profile may indicate a strength of the wind (represent a wind speed) depending on the distance between the visualisation of the basic path and the profile line. The larger such distance is, the stronger is the wind, i.e., the higher is the wind speed.

Alternatively or additionally, the indicators can include a wind profile displayed on a compass rose. Since the compass rose regularly includes an aircraft symbol indicating a current position of the aircraft, the wind profile can be displayed in relation to the current position of the aircraft. Thus, it is possible for the pilot to see the wind profile ahead of the aircraft (and along the route (e.g., basic path), on which the aircraft currently flies).

In an implementation variant, the wind profile can be movably displayed on the compass rose corresponding to a flight speed of the aircraft. In other words, the wind profile moves through the compass rose.

In an implementation variant, the flight guidance system can be further configured to calculate an adapted path by modifying the basic path in accordance with the wind speed and direction along the basic path. Such adapted path is calculated, in order to compensate for the influence of the predicted wind situation ahead of the aircraft. Thus, in case of a perfect wind prediction, following the adapted path would allow the aircraft to be on the basic path after flying through the wind situation. In other words, the aircraft will reach the end point of the basic path when following the adapted path, and in case the predicted wind corresponds to the actual wind situation when the aircraft flies along the adapted path.

Thus, approaching/departing an aerodrome can be made safer, as the path, along which the aircraft approaches/departs, is taking into account sheer wind, updraft and downdraft winds along the basic path.

In an implementation variant, the visualisation can include flight through boxes along the adapted path. Flight through boxes are displayed conventionally on a display in the cockpit including further information about the surrounding of the aircraft, eventually the runway, a height, speed, vertical speed of the aircraft and the like. By displaying flight through boxes along the adapted path, such known system can be improved, as the influence of the predicted wind on the aircraft is compensated by the flight through boxes along the adapted path.

It is to be understood that the flight through boxes along the adapted path can be displayed alone or together with flight through boxes along the basic path. This additionally provides information to the pilot how much the adapted path deviates from the basic path, i.e., which wind situation will be present in the near future on the flight route.

In an implementation variant, the visualisation can include a height dependent wind speed indicator in an altitude display and/or a vertical speed display of the aircraft. Since the predicted wind data covers a region of the path, along which the aircraft approaches/departs the aerodrome, the wind at different heights above ground can also be predicted. In other words, at different heights, different kinds of winds (sheer wind, updraft, downdraft and the like) at different wind speeds may occur and may be predicted. Such information can be displayed in an altitude display and/or a vertical speed display, which allows the pilot to be informed that descending or ascending would lead to a different wind situation than at the current height of the aircraft.

In an implementation variant, the height dependent wind speed indicator can have a different appearance depending on the wind speed. Such different appearance can be a different colour indicating a wind speed (as a mere example, red for a strong winds (high wind speed), orange or yellow for mild winds and green for slow winds), a directive pattern (e.g., horizontally arranged pattern for sheer winds, vertically arranged pattern for updraft or downdraft, or diagonally arranged pattern for a combination thereof), differently sized arrows (e.g., thin arrows for slow or mild winds, and thick arrows for strong winds) pointing in the wind direction, or the like.

In an implementation variant, the flight guidance system can be further configured to calculate a location and/or orientation of the aircraft at a future time point when following the basic path and based on the predicted wind speed and direction. In other words, the location and/or orientation of the aircraft is calculated, if the aircraft is not steered differently and follows the basic path, which will result in a different location and/or orientation of the aircraft at the future time point due to the wind and compared to following the basic path without the wind.

The visualisation can then include a course deviation indicator indicating the location and/or orientation of the aircraft at the future time point. Thus, the pilot can be made aware of the course deviation when following the basic path without adapted steering of the aircraft. This allows to compensate for such course deviation in advance.

The course deviation indicator can have the shape of a direction pointer (or more than one direction pointer) indicating the direction to which the nose of the aircraft points in a three-dimensional image of the region in front of the aircraft. Such direction pointer can include one or more triangles, wherein a corner of the triangle(s) is arranged forward, while the remaining triangle indicates the nose pointing direction of the aircraft at the future time point.

According to a third aspect to better understand the present disclosure, an aircraft comprises a flight guidance system, an autopilot system, and an antenna configured to receive wind data from an aircraft assistance system, according to the first aspect or one or more of its variants. In other words, the aircraft contains equipment to receive and use the data generated by and transmitted from the aircraft assistance system described above.

Furthermore, the flight guidance system is configured to determine a basic path, along which the aircraft approaches at or departs from an aerodrome, based on signals providing horizontal and vertical aerodrome guidance. For example, such basic path can be a regular 3° glide slope path. The signals providing horizontal and vertical aerodrome guidance can be a signal sent from a corresponding ground unit at the aerodrome, for example, a conventional instrument landing system (ILS) signal.

In any case, the basic path is an approaching/departing path chosen by a system or the pilot to reach or leave the aerodrome.

The flight guidance system is further configured to analyse the wind data received from the aircraft assistance system to determine a predicted wind speed and direction in the determined basic path, and provide, to the autopilot system, the predicted wind speed and direction.

The autopilot system is configured to calculate an adapted path by modifying the basic path in accordance with the predicted wind speed and direction along the basic path, and control the aircraft to follow the adapted path.

Thus, an autopilot system of an aircraft can be provided with information to perform an improved approach to an aerodrome or follow an improved departing path.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
Figure 1 schematically illustrates an aerodrome and its vicinity with an aircraft approaching the aerodrome;
Figure 2 schematically illustrates another aerodrome and aircraft approaching the same;
Figures 3 to 6 schematically illustrate different local wind detection systems in the vicinity of an aerodrome; and
Figures 7 to 13 schematically illustrate an aircraft display with different visualisations of wind speed and direction.

In the following description, for purposes of explanation and not limitation, specific details are set forth in order to provide a thorough understanding of the present disclosure. It will be apparent to one skilled in the art that the present disclosure may be practiced in other implementations that depart from these specific details.

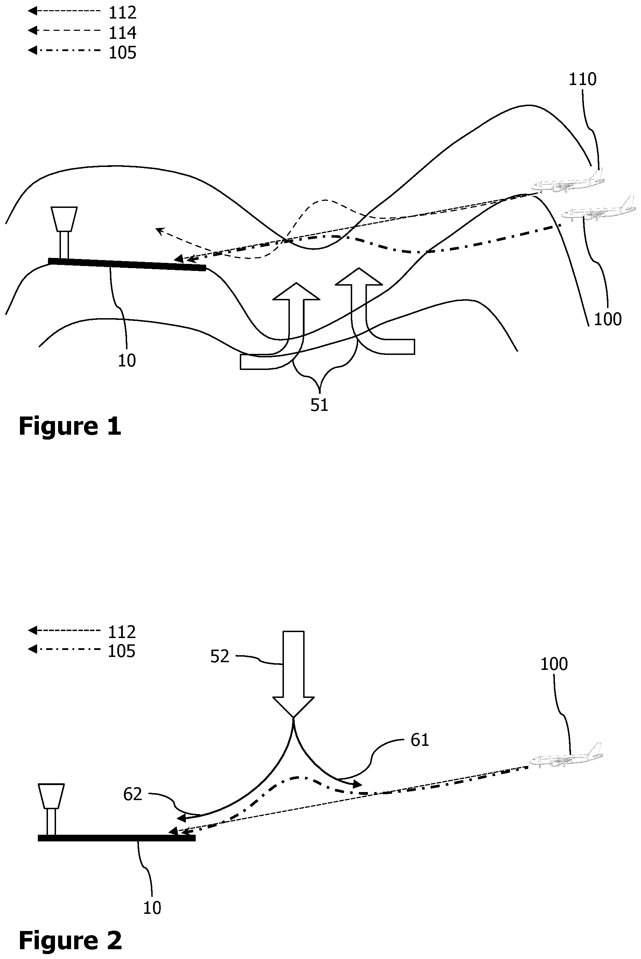

Figure 1 schematically illustrates an aerodrome 10 and its vicinity with an aircraft 100, 110 approaching the aerodrome 10. The aerodrome 10 is arranged in a mountainous area on a hill, and a valley is in front of the runway of the aerodrome 10. Thus, it is quite likely that updraft winds 51 will occur in front of the aerodrome 10 and, hence, at a path, along which the aircraft 100 approaches or departs the aerodrome 10.

Figure 1 illustrates three different paths 105, 112 and 114 and two possible positions of corresponding aircrafts 100, 110. Specifically, in a regular approach of an aircraft 110, for example, along a 3° glide slope path, the aircraft would decent continuously until reaching the aerodrome 10. This is illustrated as the straight basic path 112 (illustrated as a dotted line in Figure 1).

However, due to the updraft winds 51, the aircraft 110 will ascend as it is illustrated by the deviating path 114 (illustrated as dashed line in Figure 1). Here the pilot or an automated flight/landing system will steer the aircraft downwards against the updraft 51. This may result in a further deviation from the basic path 112, after flying through the updraft 51, but now much closer to the aerodrome 10. Thus, it may occur that the approach/landing cannot be stabilised and the aircraft 110 aborts the approach (i.e., performs a go around manoeuvre).

In accordance with the present disclosure, an aircraft assistance system will be described that allows determining a predicted wind speed and direction in the basic path 112, and calculating an adapted path 105. Specifically, by being aware of a predicted wind speed and direction along the basic path 112, the aircraft 100 can intentionally deviate from the basic path 112 and follow an adapted path 105. Here, as illustrated in Figure 1, the updraft 51 will let the aircraft 100 ascend, so that the approach to the aerodrome 10 will be at the basic path 112 shortly before landing. Thus, a stable approach is possible due to expected updraft winds 51.

Figure 2 schematically illustrates another aerodrome 10 and an aircraft 100 approaching the same. Here, downdraft winds 52 may often occur and maybe predicted. Thus, an adapted path 105 may be calculated that deviates from the basic path 112 (e.g., a 3° glide slope path). As a mere example, the adapted path 105 may take into consideration that head winds 61 and tail winds 62 will occur before and after the downdraft 52 acts onto the aircraft 100. Thus, the aircraft 100 can be steered in a manner to follow the adapted path 105. As this can be calculated in advance, a stabilised approach to the aerodrome 10 is possible.

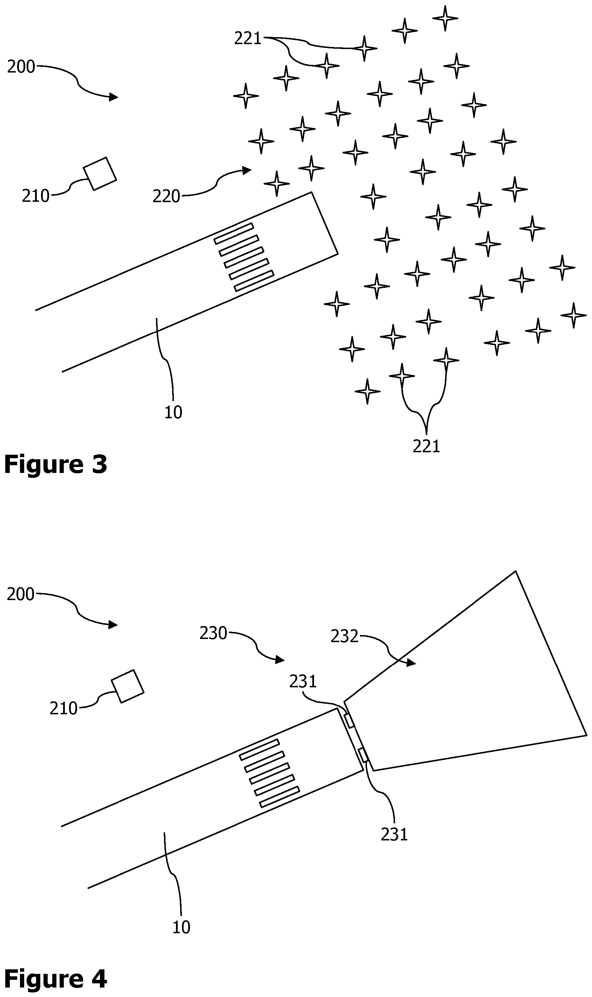

Figures 3 to 6 schematically illustrate an aircraft assistance system 200 with different local wind detection systems 220, 230, 240 in the vicinity of an aerodrome 10.

Specifically, the aircraft assistance system 200 can be configured to assist an aircraft 100 (not illustrated in Figures 3 to 5) approaching or departing an aerodrome 10. The aircraft assistance system 200 comprises the local wind detection system 220, 230, 240 configured to measure a wind speed and direction in a vicinity of the aerodrome 10.

The aircraft assistance system 200 further comprises a controller 210 configured to receive data representing the measured wind speed and direction, calculating a path 112, along which the aircraft 100 would usually approach or depart the aerodrome 10, predicted wind data representing a wind speed and direction in the path 112 for a predetermined future time point, and transmit the predicted wind data to the aircraft 100.

In accordance with the example of Figure 3, the local wind detection system comprises a ground weather measuring system 220. Such ground weather measuring system 220 can, for example, comprise a plurality of wind measuring units 221 (only some of which are provided with reference signs for sake of clarity of the drawing). The ground weather measuring system is arranged in a vicinity of the aerodrome 10, for example, at one end of the runway of the aerodrome 10, as this region will be below the approaching path 112, 105.

The controller 210 can be configured to predict the wind data by using a machine learning algorithm. For instance, the machine learning algorithm can be trained on the basis of data generated by simulations of wind speed and direction in the vicinity of the aerodrome 10, and/or data measured by employing one or more drones, and/or data measured by employing one or more traced balloons, and/or data derived from general metrological weather information for the region of the aerodrome 10, and/or data measured by the ground weather measuring system 220, particularly the plurality of wind measuring units 221.

By inputting similar information, and particularly data from the plurality of wind measuring units 221 and, for example, data derived from general metrological weather information, into the trained machine learning algorithm, wind data representing a wind speed and direction in the path 112, 105 for a predetermined future time period can be derived from the machine learning algorithm.

Each of the plurality of wind measuring units 221 can be configured to measure a wind in all three-dimensional directions. Thus, a larger picture of wind speed and direction in the vicinity of the aerodrome 10 can be achieved. As illustrated in Figure 3, an exemplary ground weather measuring system 220 can comprise a mesh or grid of a plurality of wind measuring units 221 in a region extending in the longitudinal direction from an end of the runway of the aerodrome 10 as well as to one or both sides from such longitudinal extension.

The location and coverage area of the ground weather measuring system 220 may depend on the topography in the vicinity of the aerodrome 10. To optimise the aircraft assistance system 200, the ground weather should be measured in regions of distinct topographic changes. As a mere example, a valley, a hill, a dip, woods, or the like, which is in the near of the aerodrome and, particularly, underneath the path 112, should be covered by the ground weather measuring system 220, as it is quite likely that different wind directions and/or different wind speeds may occur in such distinct regions.

The future time point may usually not be further in the future then the approaching phase duration of the aircraft. As a mere example, such future time point may be 10 seconds, 30 seconds, 60 seconds, 90 seconds, 3 minutes, 5 minutes or 10 minutes ahead. Thus, the wind speed and direction prediction can be made for a (future) time period until this time point.

Figure 4 illustrates another example of a local wind detection system comprising a ground-based weather radar system 230. Such radar system 230 can be arranged to scan the path 112, along which the aircraft 100 will regularly approach or depart. As a mere example, one or more radar units 231 can be provided in the vicinity of the aerodrome 10, for example, at an end of a runway of the aerodrome 10 and facing/scanning in the direction of the approaching/departing aircraft 100. Thus, the radar scan area 232 includes or at least intersects with the path 112. Alternatively, the radar scan area 232 can be arranged underneath the path 112.

As with the plurality of wind measuring units 221 of Figure 3, the controller 210 can be configured to calculate a wind speed and direction in the path 112 and predict wind data representing a wind speed and direction in the path 112 for a predetermined future time point or future time period. The controller 210 in this case can also include a machine learning algorithm that may be trained on the basis of such radar scan data from the ground-based weather radar system 230.

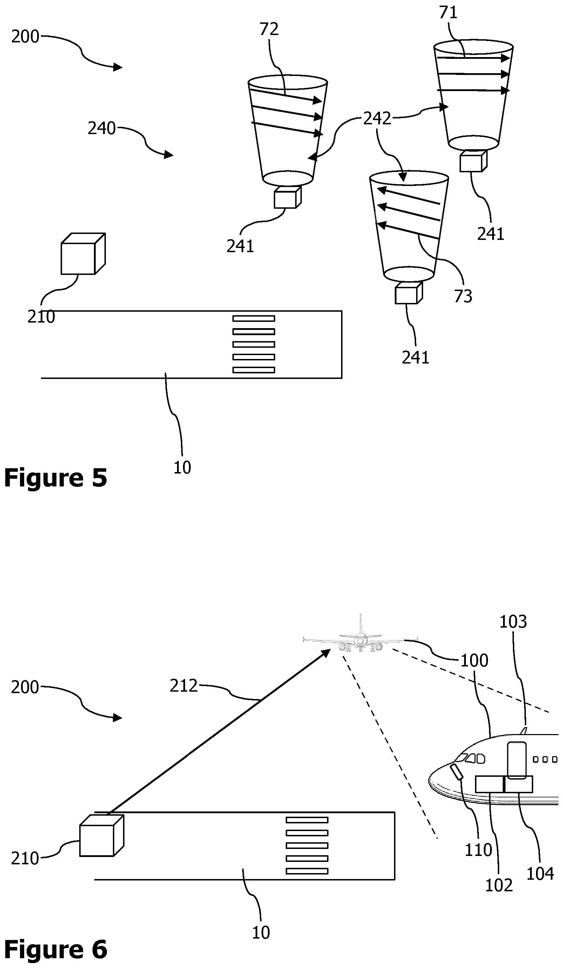

Figure 5 illustrates another example of a local wind detection system comprising a ground based light detection and ranging, LiDAR, system 240. Such LiDAR system 240 can comprise one or more LiDAR units 241 arranged to scan the path 112, along which the aircraft 100 approaches or departs, and/or to scan a region underneath and/or adjacent to the path 112.

The LiDAR system 240 allows scanning the air in scanning cones 242, for example, above the LiDAR unit 241 facing substantially upwards. The LiDAR units 241 are each able to detect a certain type of wind 71, 72, 73, such as shear winds 71, slight downdrafts 72 or slight updrafts 73 as illustrated in Figure 5. It is to be understood that the illustrated kinds of winds 71, 72, 73 are exemplary only, and that other wind directions and speeds may occur and may be measured by the LiDAR system 240. Moreover, the LiDAR system 240 is further capable of measuring a wind speed and direction at different heights, i.e. at different levels above ground. Thus, a quite granular picture on the wind situation in the vicinity of the aerodrome 10 and, particularly, at or along the path 112 can be measured.

Again, the controller 210 can include a machine learning algorithm that in this case, is trained on and is fed with data from the LiDAR system 240 to predict the wind data at a predetermined future time point or time period. Since the LiDAR system 240 already provides fine/granular wind speed and direction data, the data may directly be used by the controller 210, i.e. without a machine learning algorithm.

The example of Figure 5 may employ a SODAR system instead of or in addition to the LiDAR system 240. In other words, one or more (or all) LiDAR units 241 can be replaced by a SODAR unit in the example illustrated in Figure 5.

With reference to Figure 6, the controller 210 can further be configured to transmit the predicted wind data to the aircraft 100. Thus, the predicted wind data representing a wind speed and direction in the path 112 for a predetermined future time period (and/or time point or time points) is made available to an aircraft 100, particularly an approaching or departing aircraft 100.

The aircraft 100 can include an antenna 103 configured to receive the wind data from the aircraft assistance system 200, particularly from the controller 210. The data transmission 212 can be achieved in any known communication technique.

The aircraft 100 further comprises a flight guidance system 102 and a display 110. The flight guidance system 102 is configured to determine a basic path 112, along which the aircraft 100 approaches or departs the aerodrome 10. Such basic path 112 can be achieved by a standardised approach, such as 3° glide slope path, or any other approach suitable for the aerodrome 10. Optionally, the aerodrome 10 can be provided with an ILS signal transmission system (not illustrated) that allows the flight guidance system 102 to determine the basic path 112 based on signals providing horizontal and vertical aerodrome guidance.

The flight guidance system 102 is further configured to analyse the wind data received from the aircraft assistance system 200 to determine a predicted wind speed and direction in the determined basic path 112. The flight guidance system 102 can then display on the display 110 a visualisation including information about the predicted wind speed and direction.

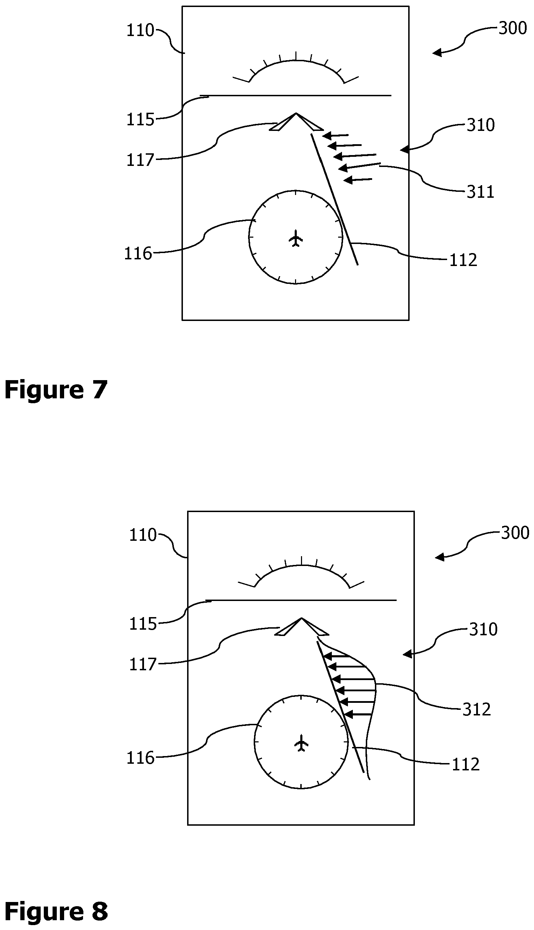

Figures 7 to 13 schematically illustrate an aircraft display 110 with different visualisations 300 of wind speed and direction.

The display 110 of the aircraft 100 may display information in a conventional manner, including a horizon 115, a compass rose 116 and course indicators 117. The display 110 may further illustrate an image or a graphic (not illustrated for sake of clarity of the drawings) of the surrounding of the aircraft 100, particularly in front of the nose of the aircraft. As a mere example, such image or graphic (not illustrated) can include a runway of the aerodrome 10 or the like.

The visualisation 300 can include one or more indicators 310 representing the wind speed and direction.

In the example of Figure 7, indicators 311 are displayed along a visualisation of the basic path 112. As the wind situation is received via the wind data for a future time point or period, the indicators 311 are illustrated in a region of the path 112 lying ahead of the aircraft 100 (at least at the beginning, as the aircraft 100 travels). It is to be understood that, while the aircraft 100 flies, the indicator 311 may be illustrated as moving closer to the current position, i.e. to the lower right part of the display 110 in Figure 7.

The indicators 310 can have the form of one or more arrows 311 showing the wind direction by pointing into the direction into which the wind blows. A length of the arrows 311 can correspond to a magnitude of the wind speed, i.e., the longer the arrow 311 is, the higher is (the magnitude of) the wind speed.

In accordance with another example, illustrated in Figure 8, the indicators 310 can include a wind profile 312 displayed along the visualisation of the basic path 112. The profile may be illustrated by a curved line, wherein a distance between the curved line 312 and the visualisation of the basic path 112 corresponds to a wind speed. The wind profile 312 may further include arrows as illustrated in Figure 8, which may emphasise the wind speed, i.e., the strength of the wind along the wind profile 312. It is to be understood that the arrows may further indicate a direction of the wind.

It is to be understood that each of the examples of Figures 7 and 8 could be employed to display a wind direction or wind profile indicating only the cross wind component and/or a vertical wind component (representing updraft and/or downdraft) and/or a head/tail wind component. This would render the visualisation simpler for a pilot to interpret, as pilots are trained to handle crosswinds, updraft and/or downdraft as well as head/tail winds.

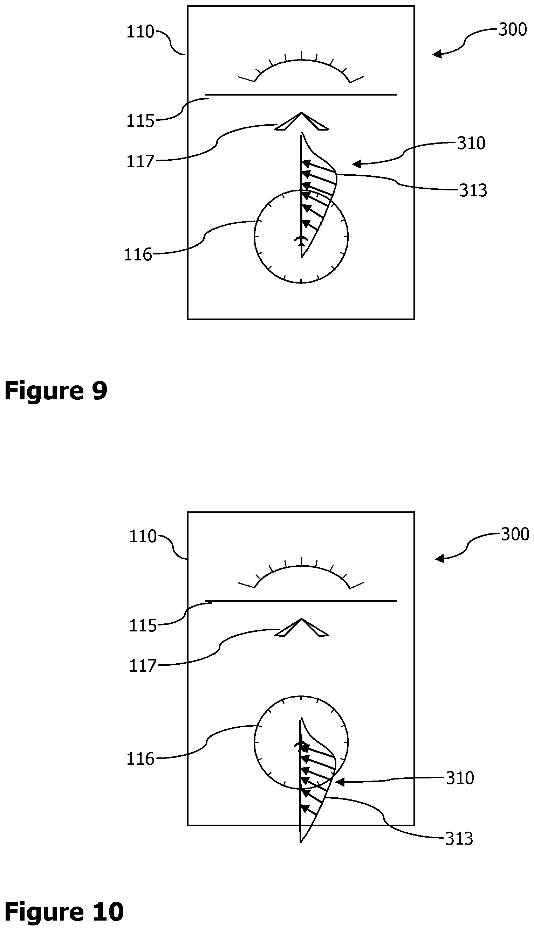

In accordance with another example, illustrated in Figure 9, the indicators 310 can include a wind profile 313 displayed on the compass rose 116. As the compass rose 116 illustrates a centre of the aircraft 100 (in a top view), the wind profile 313 can be arranged relative to such illustrative centre of the aircraft 100. Thus, it is derivable for the pilot where particular winds will occur in front of the aircraft 100.

The wind profile 313 can be displayed in a moving manner on the compass rose 116 corresponding to the flight speed of the aircraft 100. Specifically, as can be derived from a comparison of Figures 9 and 10, the wind profile 313 moves downwards in the display 110, as the aircraft 100 moves forward.

Furthermore, the flight guidance system 102 can be further configured to calculate an adapted path 105 (Figures 1 and 2) by modifying the basic path 112 in accordance with the wind speed and direction along the basic path. In other words, when analysing the wind data received from the aircraft assistance system to determine a predicted wind speed and direction in the basic path 112, the flight guidance system 102 can calculate the adapted path 105.

Such calculation may include a prediction of the influence of the to-be-expected wind on the aircraft 100 and supplementing or deducting such influence from the basic path 112. As a mere example, if it is determined that an updraft 51 will ascend the aircraft 100 by a certain amount, the adapted path 105 will be lowered based on that certain amount of ascending. It is to be understood that such calculation may take an inertia of the aircraft 100 into account that may differ for the wind (here updraft 51) and the counter steering (e.g., by change of motor power and/or change of steering surfaces).

The adapted path 105 may be illustrated on the display 110 in different manners.

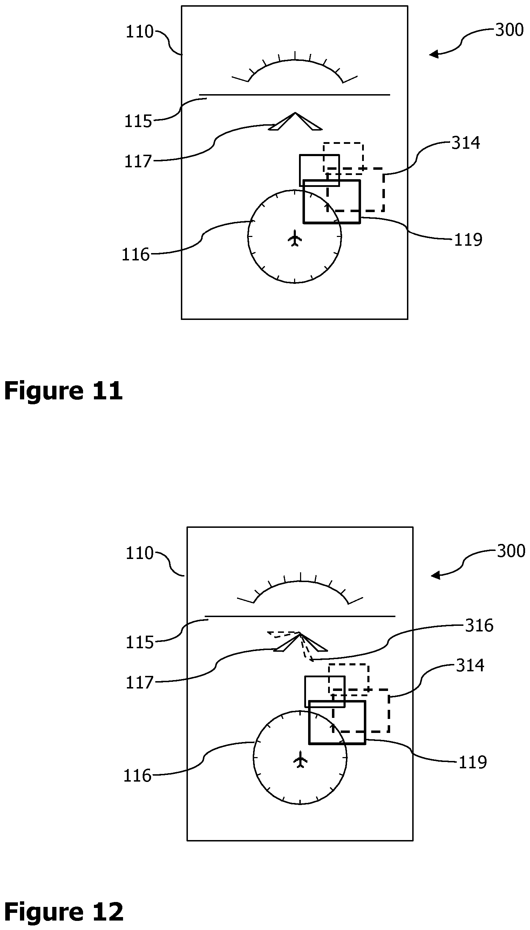

One example is illustrated in Figure 11. The display 110 can display flight through boxes 119 that are displayed along the basic path 112 (in Figure 11 illustrated as boxes in solid lines). This can be a known way of displaying an ILS path 112. The flight guidance system 102 now alternatively or additionally illustrates flight through boxes 314 along the adapted path 105 (in Figure 11 illustrated as boxes in dashed lines). Thus, a pilot is able to follow the flight through boxes 314 along the adapted path 105, in order to compensate for any influence on the aircraft 100 due to winds ahead of the aircraft 100.

Figure 12 illustrates a further exemplary visualisation 300. The flight guidance system 102 can further be configured to calculate a location and/or orientation of the aircraft 100 at a future time point when following the basic path 112 and based on the predicted wind speed and direction. In other words, it is calculated where the aircraft 100 will be located and how it will be oriented, when the steering is not changed, but the aircraft 100 will deviate from the basic path 112 under the influence of the wind ahead of the aircraft 100.

The visualisation 300 can then include a course deviation indicator 316 indicating the calculated location and/or orientation of the aircraft 100 at the future time point. This allows the pilot to identify the to-be-expected change of location and/or orientation of the aircraft 100.

In this example, the fly through boxes 119, 314 of Figure 11 are included. It is to be understood, that the course deviation indicator 316 can be displayed and any of the other exemplary visualisations 300, such as those illustrated in Figures 7 to 11 and 13.

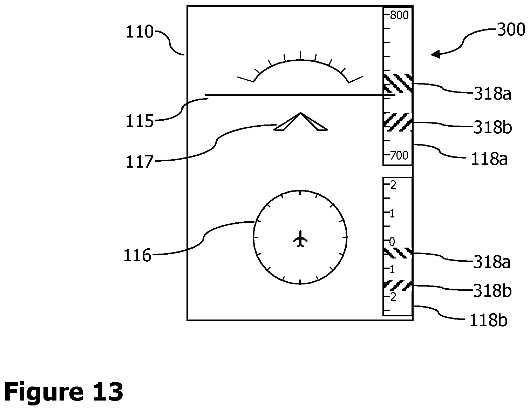

Figure 13 illustrates a further exemplary visualisation 300. Here the display 110 may include altitude related display components 118, such as an altitude display 118a and/or a vertical speed display 118b.

Since the predicted wind ahead of the aircraft may occur and/or may have a different strength (wind speed) as well as a different wind direction at different heights (i.e. different levels above ground), such information may further be provided to the pilot in the display 110. In the illustrated example, the visualisation 300 includes a height dependent wind speed indicator 318 in the altitude display 118a and/or in the vertical speed display 118b. There can be a plurality of height dependent wind speed indicators 318, depending on the height where the event occurs.

In addition, the appearance of the height dependent wind speed indicator 318 may depend on the wind speed. As a mere example, Figure 13 illustrates a first wind speed indicator 318a at a certain height or in the vertical speed display 118b as being reachable when achieving a certain vertical speed, and illustrates a second wind speed indicator 318b in a different manner at a different height or different area of the vertical speed display 118b. Such different manner may represent that the wind speed indicated by the first indicator 318a is higher than the wind speed indicated by the second indicator 318b or vice versa.

Since the aircraft 100 moves along a path 112, 105, the wind speed indicator 318 may reflect a wind situation at the current position of the aircraft 100 over ground.

In other words, the illustrated displayed height dependent wind speed indicator 318 are present above or below the aircraft 100 at the current point of time.

Alternatively, the height dependent wind speed indicators 318a,b may be displayed in correspondence to the flight route, for example basic path 112 or adapted path 105. In more detail, the flight guidance system 102 when analysing the wind data may take into consideration that the aircraft will be at a certain height (level above ground) along the path 112, 105 which descends or ascends. Thus, the flight guidance system 102 can display the height dependent wind speed indicators 318a,b in the altitude display 118a according to a height of the path 112, 105.

The pilot, hence, will become aware, for example, during a decent that the aircraft 100 will reach a certain altitude at a future time point, when following the path 112, 105.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft assistance system (200) for assisting an aircraft (100) approaching and departing an aerodrome (10), comprising:
a local wind detection system (220, 230, 240) configured to measure a wind speed and direction in a vicinity of the aerodrome (10); and
a controller (210) configured to:
receive data representing the measured wind speed and direction,
calculate a wind speed and direction in a path (112), along which the aircraft (100) approaches or departs the aerodrome (10),
predict wind data representing a wind speed and direction in the path (112) for a predetermined future time period, and
transmit the predicted wind data to the aircraft (100).

2. The aircraft assistance system (200) of claim 1, wherein the local wind detection system comprises a ground weather measuring system (220), preferably comprising a plurality of wind measuring units (221), and
wherein the controller (210) is further configured to predict the wind data by using a machine learning algorithm.

3. The aircraft assistance system (200) of claim 2, wherein the machine learning algorithm is trained on the basis of data generated by simulations of wind speed and direction in the vicinity of the aerodrome (10), and/or data measured by employing one or more drones, and/or data measured by employing one or more traced balloons, and/or data derived from general metrological weather information for the region of the aerodrome (10).

4. The aircraft assistance system (200) of claim 2 or 3, wherein each wind measuring unit (221) is configured to measure a wind in one direction, in two directions, particularly planar on the ground, or in all three-dimensional directions.

5. The aircraft assistance system (200) of one of claims 1 to 4, wherein the local wind detection system comprises a ground based weather radar system (230), preferably comprising one or more radar units (231) arranged to scan the path (112), along which the aircraft (100) approaches or departs.

6. The aircraft assistance system (200) of one of claims 1 to 5, wherein the local wind detection system comprises a ground based light detection and ranging, LiDAR, system (240), preferably comprising one or more LiDAR units (241) arranged to scan the path (112), along which the aircraft (100) approaches or departs.

7. The aircraft assistance system (200) of one of claims 1 to 5, wherein the local wind detection system comprises a ground based a sonic detection and ranging, SODAR, system (240), preferably comprising one or more SODAR units (241) arranged to scan the path (112), along which the aircraft (100) approaches or departs.

8. An aircraft (100), comprising:
a flight guidance system (102);
a display (110); and
an antenna (103) configured to receive wind data from an aircraft assistance system (200), according to one of claims 1 to 7,
wherein the flight guidance system (102) is configured to:
determine a basic path (112), along which the aircraft (100) approaches an aerodrome (10), based on signals providing horizontal and vertical aerodrome guidance,
analyse the wind data received from the aircraft assistance system (200) to determine a predicted wind speed and direction in the determined basic path (112), and
display, on the display (110), a visualisation (300) including information about the predicted wind speed and direction.

9. The aircraft (100) of claim 8, wherein the visualisation includes one or more indicators (310) representing the wind speed and direction.

10. The aircraft (100) of claim 9, wherein the one or more indicators (310) are displayed along a visualisation of the basic path (112), preferably as arrows (311) showing a cross wind component and/or vertical component and/or head or tail wind component of the wind direction relative to the planes of the basic path (112) and having a length corresponding to a magnitude of the wind speed, or
wherein the one or more indicators (310) are displayed along a visualisation of the basic path (112), preferably as arrows (311) showing the wind direction and having a length corresponding to a magnitude of the wind speed, or
wherein the one or more indicators (310) include a wind profile (312) displayed along a visualisation of the basic path (112), or
wherein the one or more indicators (310) include a wind profile (313) displayed on a compass rose (116), wherein, preferably, the wind profile (313) is movably displayed on the compass rose (116) corresponding to a flight speed of the aircraft (100).

11. The aircraft (100) of one of claims 8 to 10, wherein the flight guidance system (102) is further configured to:
calculate an adapted path (105) by modifying the basic path (112) in accordance with the wind speed and direction along the basic path (112).

12. The aircraft (100) of claim 11, wherein the visualisation (300) includes flight through boxes (314) along the adapted path (105).

13. The aircraft (100) of one of claims 8 to 12, wherein the visualisation (300) includes a height dependent wind speed indicator (318) in an altitude display (118a) and/or a vertical speed display (118b) of the aircraft (100), wherein, preferably, the height dependent wind speed indicator (318) has a different appearance depending on the wind speed.

14. The aircraft (100) of one of claims 8 to 13, wherein the flight guidance system (102) is further configured to:
calculate a location and/or orientation of the aircraft (100) at a future time point when following the basic path (112) and based on the predicted wind speed and direction,
wherein the visualisation includes a course deviation indicator (316) indicating the location and/or orientation of the aircraft (100) at the future time point.

15. An aircraft (100), comprising:
a flight guidance system (102);
an autopilot system display (104); and
an antenna (103) configured to receive wind data from an aircraft assistance system (200), according to one of claims 1 to 8,
wherein the flight guidance system (102) is configured to:
determine a basic path (112), along which the aircraft (100) approaches an aerodrome (10), based on signals providing horizontal and vertical aerodrome guidance,
analyse the wind data received from the aircraft assistance system (200) to determine a predicted wind speed and direction in the determined basic path (112), and
provide, to the autopilot system (104), the predicted wind speed and direction,
wherein the autopilot system (104) is configured to:
calculate an adapted path (105) by modifying the basic path (112) in accordance with the predicted wind speed and direction along the basic path (112), and
control the aircraft (100) to follow the adapted path (105).
